# EUROPÄISCHE PATENTSCHRIFT

(11) **EP 1 278 959 B1**
(45) Veröffentlichungstag und Bekanntmachung des Hinweises auf die Patenterteilung: **05.10.2005**
(21) Anmeldenummer: 00943943.1
(22) Anmeldetag: 29.06.2000
(51) Int. Cl.: F04B 1/00

(54) **KUGELGELENKVERBINDUNG ZWISCHEN EINEM GLEITSCHUH UND EINEM KOLBEN**
METHOD FOR PRODUCING A BALL-AND-SOCKET JOINT BETWEEN A SLIPPER AND A PISTON, AND A BALL-AND-SOCKET JOINT OF THIS TYPE
PROCEDE DE REALISATION D'UN JOINT A ROTULE ENTRE UN PATIN DE GLISSEMENT ET UN PISTON, ET UN TEL JOINT A ROTULE

(30) Priorität: 21.07.1999 DE 19934218
(43) Veröffentlichungstag der Anmeldung: 29.01.2003
(73) Patentinhaber: Brueninghaus Hydromatik GmbH, 89275 Elchingen (DE)
(72) Erfinder: DONDERS, Steven, D-72160 Horb (DE)
(74) Vertreter: Körfer, Thomas
(86) Internationale Anmeldenummer: PCT/EP2000/006077
(87) Internationale Veröffentlichungsnummer: WO 2001/007785

(56) Entgegenhaltungen:
- EP-A- 0 371 834
- WO-A-98/42949
- DE-A- 19 734 217

## Beschreibung

Die Erfindung bezieht sich auf ein Verfahren nach dem Oberbegriff des Anspruchs 1 oder 2 und eine Kugelgelenkverbindung nach dem Oberbegriff des Anspruchs 7.

Ein Verfahren nach dem Oberbegriff des Anspruchs 1 ist in der DE 197 34 217 A1 beschrieben. Bei diesem bekannten Verfahren wird der mit Querschnittsübermaß vorgefertigte Kolben nach seiner Verbindung mit dem Gleitschuh durch kaltes Bördeln eines von der Mantelfläche radial abstehenden Ausnehmungsrandes formschlüssig mit dem Gleitschuh verbunden, dann an seiner Mantelfläche gehärtet und dann an seiner Mantelfläche endbearbeitet, insbesondere geschliffen. Bei diesem bekannten Verfahren bedarf es eines beträchtlichen Arbeitsaufwandes, wobei der spanabhebende Arbeitsgang der letzte Arbeitsgang ist. Außerdem ist mit einer beträchtlichen Aufweitung der Bördelung zu rechnen, was darauf zurückzuführen ist, daß aufgrund der beim kalten Verformen auftretenden beträchtlichen Spannungen die Bördelung zurückfedert und deshalb die Bördelung die Gelenkkugel nur mit einem verhältnismäßig großen Bewegungsspiel hintergreift. Ferner ist diese Kugelgelenkverbindung auf ein verhältnismäßig weiches Material für den Gleitschuh beschränkt, da sich härtere Materialien nicht bördeln lassen.

Der Erfindung liegt die Aufgabe zugrunde, ein Verfahren bzw. eine Kugelgelenkverbindung nach dem Oberbegriff des Anspruchs 1, 2 bzw. 7 zu vereinfachen bzw. so auszubilden, daß eine bessere und/oder kostengünstigere Herstellung möglich ist.

Diese Aufgabe wird durch die Merkmale des Anspruchs 1 oder 2 bzw. 7 gelöst.

Bei dem erfindungsgemäßen Verfahren nach Anspruch 1 wird die Mantelfläche des Kolbens vor seiner Verbindung mit dem Gleitschuh endbearbeitet und es wird nach der Zusammenführung der halbkugelförmigen Ausnehmung und der Gelenkkugel der Ausnehmungsrand gebördelt. Das Zusammenführen und das Verbinden des Kolbens mit dem Gleitschuh sind somit die letzten Schritte des Verfahrens. D. h. alle anderen Verfahrensschritte können jeweils an den noch einzelnen Gelenkverbindungsteilen ausgeführt werden, wodurch die Handhabung der Teile und deren Positionierung beim jeweiligen Verfahrensschritt bedeutend vereinfacht werden. Außerdem werden Verunreinigungen des Kugelgelenks vermieden, da beim erfindungsgemäßen Verfahren vor dem Zusammenführen und Verbinden des Kolbens mit dem Gleitschuh die Gelenkflächen von vorherigen Verschmutzungen einfach und leicht gereinigt werden können und nach der Verbindung keine Verschmutzung mehr anfällt.

Im Gegensatz zum bekannten Verfahren, bei dem der Ausnehmungsrand kaltgebördelt wird, erfolgt beim erfindungsgemäßen Verfahren eine Materialgefügeumwandlung durch Erwärmen des Ausnehmungsrandes, wobei sich an diesen Verfahrensschritt zwei unterschiedliche Verfahrensschritte anschließen können. Zum einen wird das Material des Ausnehmungsrandes auf eine solche Temperatur erwärmt, daß das Materialgefüge eine Umwandlung zu einem auch im kalten Zustand weichen Materialgefüge erfährt, wonach die Verformung des Ausnehmungsrandes in eine die Gelenkkugel formschlüssig hintergreifende Form durch Kaltbördeln erfolgen kann. Es ist jedoch auch möglich, das Material gemäß Anspruch 3 auf eine solche Temperatur zu erwärmen, bei der das Material seine Festigkeit vermindert, um bei dieser Temperatur warmzubördeln, wobei das Material mit verhältnismäßig geringen Verformungskräften plastisch verformt werden kann. Hierbei sind geringere Verformungskräfte erforderlich, als wie sie beim Kaltbördeln erforderlich sind. Das Warmbördeln mit geringeren Verformungskräften ist besonders vorteilhaft, um beim Verformen des Ausnehmungsrandes die Gelenkkugel bzw. deren Oberfläche nicht zu beeinträchtigen und außerdem ein zwischen der Gelenkkugel dem Ausnehmungsrand angestrebtes Bewegungsspiel aufrechtzuerhalten.

Die vorbeschriebenen Vorteile gelten entsprechend auch für das erfindungsgemäße Verfahren nach Anspruch 2 zum Herstellen einer Kugelgelenkverbindung, bei der der Ausnehmungsrand am Gleitschuh angeordnet ist.

Ein Warmbördeln gemäß Anspruch 3 oder 7 ermöglicht nicht nur die Verwendung eines Materials höherer Festigkeit, insbesondere von Stahl, für den Ausnehmungsrand bzw. Kolben und/oder den Gleitschuh, sondern ein Warmbördeln läßt sich auch mit geringeren Materialspannungen durchführen, so daß die Warmbördelung aufgrund geringerer elastischer Rückspannungen genauer und die Kugelgelenkverbindung mit einem geringeren Bewegungsspiel hergestellt werden kann, wobei Beeinträchtigungen der Oberfläche der Gelenkkugel beim Warmbördeln vermieden werden.

Es ist auch vorteilhaft, den Ausnehmungsrand mit einer zu seinem freien Rand hin konvergenten, insbesondere kegelförmigen Form seiner Außenmantelfläche zu formen. Hierdurch werden die für das Bördeln erforderlichen Verformungskräfte sowie daraus resultierende Materialbelastungen weiter verringert. Dagegen zeigt es sich, daß ein solcher verjüngter Ausnehmungsrand die im Funktionsbetrieb der Kolbenmaschine auftretenden Axialkräfte (Kolbenrückholkräfte) sicher aufzunehmen vermag und zwar sowohl dann, wenn der Ausnehmungsrand aus einem Metall guter Gleiteigenschaft, wie z.B. Messing oder Bronze, besteht oder aus Stahl besteht, das im Vergleich mit dem vorgenannten Gleitmaterial eine höhere Festigkeit aufweist. In solchen Fällen, in denen an den Gleitschuh die Forderung nach einer hohen Festigkeit und zugleich nach einer guter Gleiteigenschaft gestellt ist, empfiehlt es sich, den Gleitschuh aus Metall hoher Festigkeit oder Härte, insbesondere Stahl, herzustellen und ihn in seinem Fußbereich mit einem seine Fußfläche bildenden Gleitteil auszugestalten.

Eine andere Maßnahme, die Oberflächen des Kolbens und/oder Gleitschuhs zu härten und dabei einen weicheren Kern zu gewährleisten, wodurch eine hohe Bruchfestigkeit erreicht wird, läßt sich durch nitrieren oder gasnitrieren der Oberfläche des Kolbens und/oder Gleitschuhs erreichen.

Eine erfindungsgemäße Kugelgelenkverbindung läßt sich dadurch ausgestalten, daß die Gelenkausnehmung am Gleitschuh oder am Kolben ausgebildet wird und die Gelenkkugel am jeweils anderen Gelenkteil. Die Anordung der Gelenkausnehmung am Kolben ermöglicht eine besonders günstige Ausnutzung der Mantelfläche des Kolbens als Führungsfläche, so daß hierdurch eine besonders kurze Bauweise der Kolbenmaschine erreichbar ist.

Nachfolgend werden die Erfindung und weitere durch sie erzielbare Vorteile anhand von vorteilhaften Ausgestaltungen und Zeichnungen näher erläutert. Es zeigen
- Fig. 1: eine erfindungsgemäße Kugelgelenkverbindung zwischen einem Gleitschuh und einem Kolben im axialen Schnitt;
- Fig. 2: einen Ausnehmungsrand des Kolbens in einer vorgefertigten Form;
- Fig. 3: die Kugelgelenkverbindung in abgewandelter Ausgestaltung.

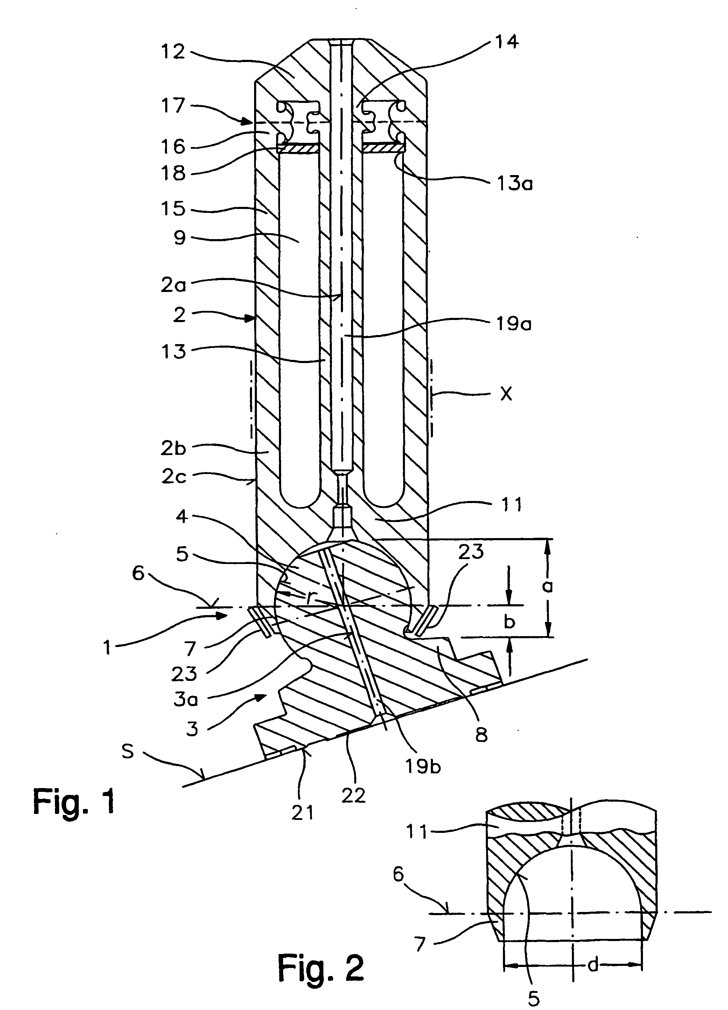

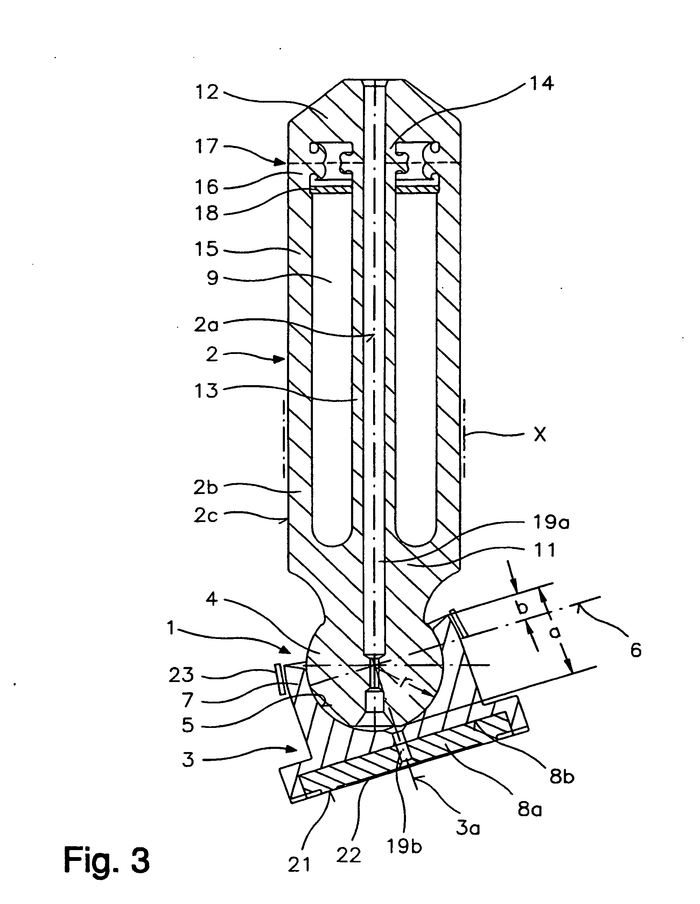

Die allgemein mit 1 bezeichnete Kugelgelenkverbindung verbindet einen Kolben 2, vorzugsweise aus Stahl, und einen Gleitschuh 3, vorzugsweise aus Bronze oder Messing (Fig. 1) oder ebenfalls aus Stahl (Fig. 3), bei Gewährleistung allseitiger begrenzter Schwenkbewegungen zwischen dem Kolben 2 und dem Gleitschuh 3. Die Mittelachsen des Kolbens 2 und des Gleitschuhs 3 sind mit 2a und 3a bezeichnet.

Die Gelenkverbindung 1 umfaßt eine kalottenförmige bzw. kugelabschnittförmige Gelenkausnehmung 5 einer Tiefe a auf, die größer ist als der Kugelradius r einer darin schwenkbar gelagerten Gelenkkugel 4, wobei ein den Äquator 6 der Gelenkausnehmung 5 axial überragender Ausnehmungsrand 7 die Gelenkkugel 4 hintergreift und dabei der in dieser Kugelringzone konvergenten Form der Gelenkugel bei Aufrechterhaltung eines Bewegungsspiels folgt. Wie aus Fig. 1 zu entnehmen ist, ist die axiale Länge b des Ausnehmungsrandes 7 so lang bemessen, daß sie in der in Fig. 1 dargestellten maximalen Schwenkstellung sich bis in den Eckenbereich zwischen der Gelenkkugel 4 und einem Kugelhals oder einem Basisteil 8 des Gleitschuhs 3 erstreckt. Beim vorliegenden Ausführungsbeispiel verjüngt sich der Ausnehmungsrand 7 zu seinem freien Ende hin, wobei die Außenmantelfläche vorzugsweise eine Kegelfläche ist.

Der zylindrische Kolben 2 ist vorzugsweise ein Hohlkolben, dessen insbesondere als Ringraum ausgebildeter Hohlraum 9 sich von einem hinteren Basisabschnitt 11, in dem die Gelenkausnehmung 5 angeordnet ist, bis zu einem stirnseitigen Endabschnitt 12 erstreckt, der einen Deckel bildet und vorzugsweise durch ein Reibschweißverfahren mit der Umfangswand des übrigen Kolbenteils verbunden ist. Die vor dem Reibschweißverfahren vorhandene Fuge zwischen den verschweißten Teilen ist durch eine gestrichelte Linie verdeutlicht. Der vorzugsweise ringförmige Hohlraum 9 umschließt einen zylindrischen Mittelzapfen 13, der sich einteilig vom Basisabschnitt 11 nach vorne erstreckt und ebenfalls durch Reibschweißen mit dem Endabschnitt 12 bzw. einem von diesem zurückstehenden Mittelzapfenansatz 14 verbunden ist. Dies gilt auch für die im Bereich des Hohlraums 9 hohlzylindrische Umfangswand 15 des Kolbens 2, die sich ebenfalls einteilig vom Basisabschnitt 11 nach vorne erstreckt und durch Reibschweißen mit dem Endabschnitt 12 oder einem darum angeordneten Umfangswandansatz 16 verbunden ist. Innenseitig von der allgemein mit 17 bezeichneten Schweißstelle ist der Mittelzapfen 13 durch eine Ringscheibe 18 radial an der Umfangswand 15 abgestützt, wobei die Ringscheibe 18 an einer vorzugsweise an der Umfangswand 15 vorhandene Innenschulterfläche 13a anliegt.

Längs durch den Kolben 2 und den Gleitschuh 3 erstreckt sich jeweils ein Kanal 19a, 19b, der in eine an der ebenen Fußfläche 21 des Gleitschuhs 3 angeordnete flache Ausnehmung 22 mündet. Durch die Kanäle 19a, 19b kann sich im Funktionsbetrieb der hydrostatischen Maschine der Arbeitsdruck im hydraulischen Medium bis zur Ausnehmung 22 fortpflanzen, wo das hydraulische Medium eine Schmierung und der Druck eine Druckentlastung in an sich bekannter Weise bewirkt.

Der Kolben 2 besteht vorzugsweise aus härtbarem Stahl, insbesondere durch Nitrierhärten härtbarem Stahl. Zwecks Vergrößerung der Festigkeit und Härte ist seine Mantelfläche vorzugsweise nitriert und gehärtet.

Die vorliegende Kugelgelenkverbindung 1 eignet sich zur schwenkbaren Abstützung eines Kolbens 2 für Kolbenmaschinen, insbesondere Axialkolbenmaschinen, an einer Stützfläche S, an der der Gleitschuh 3 mit seiner Fußfläche 21 anliegt. Bei einer Axialkolbenmaschine kann es sich bei der Stützfläche S um die schiefe Fläche einer sogenannten Schrägschreibe handeln.

Nachfolgend werden die Herstellung eines bevorzugten Herstellungsverfahrens der den Kolben 2 und den damit unlösbar verbundenen Gleitschuh 3 umfassenden Kolbenanordnung beschrieben. Der Gleitschuh 3 kann als endgültig fertiggestelltes Bauteil in einer großen Stückzahl hergestellt und zur Verbindung mit dem Kolben 2 bereitgestellt werden.

Der Kolben 2 wird als vorgefertigter Kolbenrohling vorzugsweise ebenfalls in großer Stückzahl vorgefertigt und bereitgestellt. In dieser Vorfertigungsform erstreckt sich der Ausnehmungsrand 7 axial mit einem Innendurchmesser d, der unter Berücksichtigung eines Bewegungsspiels an den Durchmesser der Gelenkkugel 4 oder der Gelenkausnehmung 5 angepaßt sein kann, so daß die Gelenkkugel 4 in die Gelenkausnehmung 5 einführbar ist. Dabei werden das stirnseitige Endteil 12 und der übrige Kolbenteil 2b mit einem Querschnittübermaß x hergestellt, das nach dem Schweißen gegebenenfalls nach vorheriger Nitrierung gehärtet und spanabhebend endbearbeitet wird, z.B. durch Schleifen. Dabei kann die Reihenfolge der Verfahrensschritte vor oder nach dem Schweißen, nämlich das Einarbeiten des Hohlraums 9 der Gelenkausnehmung 5 und des Kanals 19a beliebig sein. Wesentlich ist, daß die formschlüssige Verbindung der Gelenkkugel 4 mit dem Kolben 2 nach dem Nitrieren und/oder Härten und Endbearbeiten der Mantelfläche 2c als letzter Arbeitsgang geschaffen wird.

Zum Verbinden werden die Gelenkkugel 4 und die Gelenkausnehmung 5 zusammengesteckt und gegebenenfalls der Gleitschuh 3 in seiner mittleren Stellung gehalten, was durch Abstützen erfolgen kann. Dann wird der Ausnehmungsrand 7 mittels einer geeigneten Heizvorrichtung, z.B. in Form eines andeutungsweise dargestellten Heizringes 23 etwa in der Breite der axialen Länge b, auf eine Temperatur erwärmt, bei der die Härte des Materials vermindert wird, so daß auch nach dem Erkalten des Materials der Ausnehmungsrand 7 mit geringeren Verformungskräften gebördelt werden kann oder auf eine Temperatur erwärmt werden kann, bei der die Festigkeit des Materials verringert ist und der Ausnehmungsrand warmgebördelt werden kann. In beiden Fällen läßt sich der Ausnehmungsrand mit relativ geringen Kräften plastisch in die in Fig. 1 dargestellte Form bördeln.

Die verhältnismäßig geringen Verformungskräfte stellen sicher, daß der Ausnehmungsrand 7 ohne eine mechanische Überlastung des z.B. aus weicherem Material bestehenden Gleitschuhs 3 verformt wird. Das Erwärmen kann durch direkte Erwärmung z.B. mittels einer Flamme oder induktiv durch eine induktive elektrische Heizvorrichtung erfolgen. Durch das lokale Erwärmen des Ausnehmungsrandes 7 wird in diesem Bereich das gehärtete Material wieder weich und es kann somit leicht verformt werden ohne daß der übrige Bereich des Kolbens 2 wesentliche Härteverluste erleidet.

Ein wesentlicher Vorteil des erfindungsgemäßen Verfahrens besteht darin, daß der Kolben 2 vor dem Zusammenfügen und Verbinden mit dem Gleitschuh 3 vollständig fertig bearbeitet werden kann, ohne daß bei der vorbeschriebenen Erwärmung besondere Maßnahmen im Hinblick auf das Bördeln erforderlich wären, wie z.B. Abdecken des zu verformenden Ausnehmungsrandes 7 beim Nitrieren, insbesondere Gasnitrieren, Abdrehen bereits nitrierter Bereiche vor dem Bördeln usw. Durch Feinabstimmung der Vorgänge Erwärmen, Bördeln und Abkühlen kann das optimale Spiel der Kugelgelenkverbindung 1 sehr einfach eingestellt und auch in der Serienfertigung sicher reproduziert werden.

Das Ausführungsbeispiel nach Fig. 3, bei dem gleiche oder vergleichbare Teile mit gleichen Bezugszeichen versehen sind, unterscheidet sich vom vorbeschriebenen Ausführungsbeispiel dadurch, daß die Gelenkkugel 4 am Kolben 2 vorzugsweise einteilig angeformt ist und der Gleitschuh 3 die Gelenkausnehmung 5 aufweist. Bei dieser Ausgestaltung wird der Kolben 2 mit der Gelenkkugel 4 vollständig gefertigt, so daß er für das Zusammenführen mit dem Gleitschuh 3 bereit ist. Die Reihenfolge der einzelnen Verfahrensschritte beim Herstellen des Kolbens 2 kann auch bei diesem Ausführungsbeispiel unterschiedlich sein.

Der Gleitschuh 3 wird mit der Gelenkausnehmung 5 und einem Ausnehmungsrand 7 vorgefertigt, wie er in Fig. 2 bereits dargestellt und beschrieben worden ist, so daß es keiner erneuten Beschreibung bedarf. Jedoch besteht beim Ausführungsbeispiel nach Fig. 3 der Gleitschuh 3 aus einem harten Material wie etwa Stahl oder vorzugsweise nitrierbarem und/oder härtbarem Stahl, wobei zur Verbesserung der Gleiteigenschaft ein vorzugsweise plattenförmiges und die Fußfläche 21 des Gleitschuhs 3 bildendes Gleitteil 8a aus einem Material guter Gleiteigenschaft, z.B. Bronze oder Messing, angeordnet und z.B. in eine Ausnehmung 8b eingesetzt und befestigt ist, z.B. durch Löten oder Kleben.

Beim letzten Verfahrensschritt zum Herstellen der Kolbenanordnung nach Fig. 3 wird die Kugelgelenkverbindung 1 entsprechend dem bereits beschriebenen Ausführungsbeispiel dadurch geschaffen bzw. vervollständigt, daß die Gelenkugel 4 in die Gelenkausnehmung 5 eingeführt wird und dann der Ausnehmungsrand 7 erwärmt und warm gebördelt wird.

## Patentansprüche

1. Verfahren zum Herstellen einer Kugelgelenkverbindung (1) zwischen einem Gleitschuh (3) und einem Kolben (2) einer Kolbenmaschine, mit folgenden Verfahrensschritten:
- Ausbilden des Gleitschuhs (3) mit einer Gelenkkugel (4) am seiner Fußfläche (21) gegenüberliegenden Ende,
- Ausbilden des Kolbens (2) mit einem Übermaß (x) an seiner Mantelfläche (2c) und mit einer halbkugelförmigen Gelenkausnehmung (5) mit einem an einem Stirnende des Kolbens (2) über den Äquator (6) der Gelenkausnehmung (5) hinausragenden Ausnehmungsrand (7) für die Gelenkkugel (4),
- Zusammenführen der Gelenkausnehmung (5) und der Gelenkkugel (4),
- Bördeln des Ausnehmungsrandes (7) in eine die Gelenkkugel (4) hintergreifende Form
- und Endbearbeiten der Mantelfläche (2c) des Kolbens (2),
**gekennzeichnet durch**
folgende Verfahrensschritte:
- Zusammenführen der Gelenkausnehmung (5) und der Gelenkkugel (4) nach dem Endbearbeiten der Mantelfläche (2c) des Kolbens (2),
- lokales Erwärmen des Ausnehmungsrandes (7) auf eine seine Härte vermindernde Temperatur und
- Bördeln des Ausnehmungsrandes (7).

2. Verfahren zum Herstellen einer Kugelgelenkverbindung (1) zwischen einem Gleitschuh (3) und einem Kolben (2) einer Kolbenmaschine, mit folgenden Verfahrensschritten:
- Ausbilden des Kolbens (2) mit einer Gelenkkugel (4) an seinem einen Stirnende,
- Ausbilden des Gleitschuhs (3) mit einer Gelenkausnehmung (5) mit einem sich über den Äquator (6) der Gelenkausnehmung (5) hinausragenden Ausnehmungsrand (7) für die Gelenkkugel (4),
- Zusammenführen der Gelenkausnehmung (5) und der Gelenkkugel (4)
und Bördeln des Ausnehmungsrandes (7) in eine die Gelenkkugel (4) formschlüssig hintergreifende Form,
**gekennzeichnet durch**
folgende Verfahrensschritte:
- lokales Erwärmen des Ausnehmungsrandes (7) auf eine die Härte des Materials verringernde Temperatur nach dem Zusammenführen und
- Bördeln des Ausnehmungsrandes (7) in eine die Gelenkkugel (4) formschlüssig hintergreifende Form.

3. Verfahren nach Anspruch 1 oder 2,
**dadurch gekennzeichnet,**
**daß** der Ausnehmungsrand (7) warmgebördelt wird.

4. Verfahren nach einem der vorherigen Ansprüche,
**dadurch gekennzeichnet,**
**daß** vor der Endbearbeitung der Mantelfläche (2c) des Kolbens (2) die Mantelfläche (2c) nitriert oder gehärtet wird, insbesondere gasnitriert wird.

5. Verfahren nach einem der Ansprüche 1 bis 3,
**dadurch gekennzeichnet,**
**daß** der Ausnehmungsrand (7) mit einer zu seinem freien Rand hin konvergenten kegelförmigen Form geformt wird.

6. Verfahren nach Anspruch 5,
**dadurch gekennzeichnet,**
**daß** die konvergente Form ohne Übermaß (x) gefertigt wird.

7. Kugelgelenkverbindung (1) zwischen einem Kolben (2) und einem Gleitschuh (3) einer Kolbenmaschine, mit
einer kugelförmigen Gelenkausnehmung (5) an dem einen Gelenkverbindungsteil,
in der eine kugelförmige Gelenkkugel (4) an einem anderen Gelenkverbindungsteil schwenkbar gelagert ist,
wobei ein Ausnehmungsrand (7) der Gelenkausnehmung (5) in eine die Gelenkkugel (4) hintergreifende Position gebördelt ist,
**dadurch gekennzeichnet,**
**daß** der Ausnehmungsrand (7) warmgebördelt ist.

8. Kugelgelenkverbindung nach Anspruch 7,
**dadurch gekennzeichnet,**
**daß** die Gelenkausnehmung (5) und der Ausnehmungsrand (7) am Kolben (2) angeordnet sind und die Gelenkkugel (4) am Gleitschuh (3) angeordnet ist.

9. Kugelgelenkverbindung nach Anspruch 7,
**dadurch gekennzeichnet,**
**daß** die Gelenkausnehmung (5) und der Ausnehmungsrand (7) am Gleitschuh (3) angeordnet sind und die Gelenkkugel (4) am Kolben (2) angeordnet ist.

10. Kugelgelenkverbindung nach Anspruch 9,
**dadurch gekennzeichnet,**
**daß** der Gleitschuh (3) aus Metall hoher Festigkeit oder Härte, insbesondere Stahl, besteht und in seinem Fußbereich ein seine Fußfläche (21) bildendes Gleitteil (8a) aufweist.

11. Kugelgelenkverbindung nach einem der Ansprüche 7 bis 10,
**dadurch gekennzeichnet,**
**daß** der Ausnehmungsrand (7) zu seinem freien Ende hin konvergent, insbesondere kegelförmig, geformt ist.

12. Kugelgelenkverbindung nach einem der vorherigen Ansprüche 7 bis 11,
**dadurch gekennzeichnet,**
**daß** der Kolben (2) und/oder der Gleitschuh (3) gehärtet, insbesondere nitriergehärtet, ist bzw. sind.

## Claims

1. Method for producing a ball-and-socket joint (1) between a slipper (3) and a piston (2) of a piston machine, having the following method steps:
- configuring the slipper (3) with a joint ball (4) at the end opposite its bottom surface (21),
- configuring the piston (2) with an overmeasure (x) on its lateral surface (2c) and with a hemispherical joint recess (5) with a recess edge (7) that protrudes beyond the equator (6) of the joint recess (5) at one end of the piston (2), for the joint ball (4),
- bringing together the joint recess (5) and the joint ball (4),
- beading the recess edge (7) into a form in which it grips behind the joint ball (4)
- and finishing the lateral surface (2c) of the piston (2),
**characterised by**
the following method steps:
- bringing together the joint recess (5) and the joint ball (4) after finishing the lateral surface (2c) of the piston (2),
- locally heating the recess edge (7) to a temperature that reduces its hardness and
- beading the recess edge (7).

2. Method for producing a ball-and-socket joint (1) between a slipper (3) and a piston (2) of a piston machine, having the following method steps:
- configuring the piston (2) with a joint ball (4) at one end,
- configuring the slipper (3) with a joint recess (5) with a recess edge (7) that protrudes beyond the equator (6) of the joint recess (5), for the joint ball (4),
- bringing together the joint recess (5) and the joint ball (4)
- and beading the recess edge (7) into a form in which it positively grips behind the joint ball (4),
**characterised by**
the following method steps:
- locally heating the recess edge (7) to a temperature that reduces the hardness of the material after the bringing-together and
- beading the recess edge (7) into a form in which it positively grips behind the joint ball (4).

3. Method according to Claim 1 or 2, **characterised in that** the recess edge (7) is hot-beaded.

4. Method according to one of the preceding claims, **characterised in that**, before finishing the lateral surface (2c) of the piston (2), the lateral surface (2c) is nitrided or hardened, in particular gas-nitrided.

5. Method according to one of Claims 1 to 3, **characterised in that** the recess edge (7) is shaped with a conical form converging towards its free edge.

6. Method according to Claim 5, **characterised in that** the converging form is produced without an overmeasure (x).

7. Ball-and-socket joint (1) between a piston (2) and a slipper (3) of a piston machine, having
a spherical joint recess (5) on one part of the ball-and-socket joint,
in which recess a spherical joint ball (4) on another part of the ball-and-socket joint is pivotably mounted,
a recess edge (7) of the joint recess (5) being beaded into a position in which it grips behind the joint ball (4), **characterised in that** the recess edge (7) is hot-beaded.

8. Ball-and-socket joint according to Claim 7, **characterised in that** the joint recess (5) and the recess edge (7) are arranged on the piston (2) and the joint ball (4) is arranged on the slipper (3).

9. Ball-and-socket joint according to Claim 7, **characterised in that** the joint recess (5) and the recess edge (7) are arranged on the slipper (3) and the joint ball (4) is arranged on the piston (2).

10. Ball-and-socket joint according to Claim 9, **characterised in that** the slipper (3) consists of metal with a high strength or hardness, in particular steel, and in its base region has a sliding part (8a) forming its base surface (21).

11. Ball-and-socket joint according to one of Claims 7 to 10, **characterised in that** the recess edge (7) is shaped to converge, in particular conically, towards its free end.

12. Ball-and-socket joint according to one of the preceding Claims 7 to 11, **characterised in that** the piston (2) and/or the slipper (3) is or are hardened, in particular nitride-hardened.

## Revendications

1. Procédé de fabrication d'une liaison à rotule (1), entre un patin (3) et un piston (2) d'une machine à pistons, comprenant les étapes de procédé suivantes :
• réalisation du patin (3) doté d'une sphère d'articulation (4) à son extrémité opposée à sa surface d'embase (21),
• réalisation du piston (2) avec une surmesure (x) au niveau de sa chemise (2c) et avec une cavité d'articulation (5) en forme de demi sphère, dotée d'un rebord de cavité (7), sur une extrémité frontale du piston (2), pour la sphère d'articulation (4), ledit rebord de cavité (7) dépassant de l'équateur (6) de la cavité d'articulation (5),
• assemblage de la cavité d'articulation (5) et de la sphère d'articulation (4),
• sertissage du rebord de cavité (7) selon une forme enserrant la sphère d'articulation (4)
• et usinage final de la chemise (2c) du piston (2),
**caractérisé par**
les étapes de procédé suivantes :
• assemblage de la cavité d'articulation (5) et de la sphère d'articulation (4) après l'usinage final de la chemise (2c) du piston (2),
• chauffage local du rebord de cavité (7) jusqu'à une température réduisant sa dureté et
• sertissage du rebord de cavité (7).

2. Procédé de fabrication d'une liaison à rotule (1) entre un patin (3) et un piston (2) d'une machine à pistons, comprenant les étapes de procédé suivantes :
• réalisation du piston (2) avec une sphère d'articulation (4) sur son extrémité frontale,
• réalisation du patin (3) avec une cavité d'articulation (5) dotée d'un rebord de cavité (7) pour la sphère d'articulation (4), ledit rebord de cavité (7) dépassant de l'équateur (6) de la cavité d'articulation (5),
• assemblage de la cavité d'articulation (5) et de la sphère d'articulation (4) et sertissage du rebord de cavité (7) selon une forme enserrant, par codage de forme, la sphère d'articulation (4),
**caractérisé par**
les étapes de procédé suivantes :
• chauffage local du rebord de cavité (7) jusqu'à une température réduisant la dureté du matériau, après l'assemblage et
• sertissage du rebord de cavité (7) selon une forme enserrant, par codage de forme, la sphère d'articulation (4).

3. Procédé selon la revendication 1 ou 2,
**caractérisé en ce que**,
le rebord de cavité (7) est serti à chaud.

4. Procédé selon l'une des revendications précédentes,
**caractérisé en ce que**,
avant l'usinage final de la chemise (2c) de piston (2), la chemise (2c) est nitrurée ou trempée, en particulier nitrurée en phase gazeuse.

5. Procédé selon l'une des revendications 1 à 3
**caractérisé en ce que**
le rebord de cavité (7) est formé selon une forme conique, convergent vers son bord libre.

6. Procédé selon la revendication 5
**caractérisé en ce que**,
la forme convergente est usinée sans surmesure (x).

7. Liaison à rotule (1) entre un piston (2) et un patin (3), d'une machine à pistons axiaux, dotée d'une cavité d'articulation (5) de forme sphérique au niveau de l'une des pièces de la liaison à rotule,
dans laquelle une sphère de rotule (4) en forme de sphère est montée orientable, au niveau d'une autre pièce de la liaison à rotule,
un rebord de cavité (7) de la cavité d'articulation (5) étant serti dans une position enserrant la sphère d'articulation (4),
**caractérisée en ce que**
le rebord de cavité (7) est serti à chaud.

8. Liaison à rotule selon la revendication 7,
**caractérisée en ce que**
la cavité d'articulation (5) et le rebord de cavité (7) sont disposés sur le piston (2), et la sphère d'articulation (4) est disposée sur le patin (3).

9. Liaison à rotule selon la revendication 7,
**caractérisée en ce que**
la cavité d'articulation (5) et le rebord de cavité (7) sont disposés sur le patin (3), et la sphère d'articulation (4) est disposée sur le piston (2).

10. Liaison à rotule selon la revendication 9,
**caractérisée en ce que**
le patin (3) est constitué d'un métal de haute résistance ou dureté, en particulier l'acier, et présente dans la zone de son embase un élément de glissement (8a) formant sa surface d'embase (21).

11. Liaison à rotule selon l'une des revendications 7 à 10
**caractérisée en ce que**
le rebord de cavité (7) est formé, convergent vers son extrémité libre, en particulier conique.

12. Liaison à rotule selon l'une des revendications 7 à 11
**caractérisée en ce que**
le piston (2) et/ou le patin (3) est/sont trempés, en particulier trempé par nitruration.
